# EUROPÄISCHE PATENTSCHRIFT

(11) **EP 0 415 301 B1**
(45) Veröffentlichungstag und Bekanntmachung des Hinweises auf die Patenterteilung: **16.06.1993**
(21) Anmeldenummer: 90116334.5
(22) Anmeldetag: 27.08.1990
(51) Int. Cl.: A01D 78/10

(54) **Heuwerbungsmaschine**
Hay-making machine
Machine de fenaison

(30) Priorität: 31.08.1989 DE 8910415 U
(43) Veröffentlichungstag der Anmeldung: 06.03.1991
(73) Patentinhaber: H. Niemeyer Söhne GmbH & Co. KG, D-48466 Hörstel (DE)
(72) Erfinder: Barlage, Bruno, D-4446 Hörstel (DE)

(56) Entgegenhaltungen:
- DE-A- 2 833 814
- DE-U- 8 811 010
- DE-U- 8 901 707
- DE-U- 8 901 707
- DE-U- 8 910 484

## Beschreibung

Die Erfindung betrifft eine Heuwerbungsmaschine in einer Ausbildung nach dem Oberbegriff des Anspruchs 1, wie sie aus der DE-U-88 11 010.9 bekannt ist.

Aufgabe der Erfindung ist es, eine Heuwerbungsmaschine mit gesteigerter Laufruhe für hohe Fahrgeschwindigkeiten zu schaffen.

Zur Lösung dieser Aufgabe zeichnet sich die Heuwerbungsmaschine durch die im kennzeichnenden Teil des Anspruchs 1 angegebenen Merkmale aus. Hinsichtlich wesentlicher, weiterer, vorteilhafter Ausgestaltungen der Erfindung wird auf die Ansprüche 2 bis 9 verwiesen.

Bei Heuwerbungsmaschinen nach der Erfindung, z. B. Kreiselschwadern, die mit vier Laufrädern ausgerüstet sind, wirkt es sich auf die Laufruhe des Gerätes besonders vorteilhaft aus, wenn jedes Laufrad eine eigene Abstützung hat. Insbesondere wenn die Einzelabstützung so ausgebildet ist, daß das Laufrad um eine horizontale Schwenkachse pendeln kann und sich über ein gefedertes Element oder einen Stoßdämpfer abstützt. Die Werkzeuge des Kreiselschwaders arbeiten schwankungsarm und verbessern dadurch die Arbeitsqualität, wenn die Stöße, die beim Überfahren von Bodenunebenheiten entstehen, nur noch abgeschwächt auf das Gerät übertragen werden. Die Federungselemente bzw. die Stoßdämpfer werden so dimensioniert, daß sie nur die Stöße auffangen, die über die Grundbelastung hinausgehen. Dann arbeitet das Gerät besonders laufruhig. Ferner wird durch die Verringerung der Schwingungsamplituden die Beanspruchung der Geräteteile wesentlich verringert und die Lebensdauer erhöht.

Ist jedem Laufrad ein etwa vertikal angeordneter Stoßdämpfer, bzw. eine gefederte Abstützung zugeordnet, ist es nach der Erfindung in vorteilhafter Weise möglich, den Dämpfungsweg und/oder die Dämpfungskraft einzustellen. Dies wird durch die Veränderung des Anlenkpunktes am Ausleger und/oder am Pendelarm, z.B. in einer Lochreihe erreicht. Man kann dadurch den Dämpfungsweg und damit das Dämpfungsverhalten des Stoßdämpfers verändern. Die Dämpfungskraft kann z. B. bei Spiralfedern durch die Vorspannkraft reguliert werden.

In einer weiteren Ausgestaltung der Erfindung kann es vorteilhaft und baulich besonders einfach sein, wenn zwei um eine Schwenkachse einzeln pendelnde Laufräder eine gemeinsame Federabstützung bzw. einen gemeinsamen Stoßdämpfer haben. Die gemeinsame, gefederte Abstützung kann über verschiedenartige Federelemente, z.B. eine Spiralfeder, Blattfeder oder Gummifeder erfolgen. Die Vorteile, daß jedem Laufrad eine einzelne Abstützung zugeordent ist, bleiben voll erhalten.

Bei einer weiteren Ausführungsform nach der Erfindung wird jedes Laufrad über einen Radträger mit einem Schwingmetall verbunden, das über eine starre Achse mit dem Fahrwerk verbunden ist. Diese Auführungsform baut einfach und preisgünstig. Der Schwenkbereich ist durch Anschläge begrenzt. Wird dieses Schwingmetall in Verbindung mit einem Pendelnachlaufrad eingesetzt, besteht die Möglichkeit, in vorteilhafter Ausgestaltung der Erfindung, das Schwingmetall im Bereich der vertikalen Pendelachse anzuordnen, um den baulichen Aufwand weiter zu verringern.

Bei einer weiteren, vorteilhaften Ausführungsform der Erfindung ist jedem Laufrad mindestens eine gefederte Abstützung und mindestens ein Stoßdämpfer zugeordnet. Bei einer derartigen Ausführung ist es von Vorteil, daß die Hauptbelastungen von der Federabstützung aufgenommen werden, während dem Stoßdämpfer die Schwingungsdämpfung obliegt. Dadurch kann er kleiner dimensioniert werden.

Eine weitere Ausführungsform besteht darin, daß jeweils zwei nebeneinander angeordnete Laufräder eine gemeinsame, federnde Abstützung oder einen gemeinsamen Stoßdämpfer haben. Dies baut einfach und kostengünstig.

Hydraulisch oder pneumatisch wirkende Stoßdämpfer lassen sich besonders dann vorteilhaft einsetzen, wenn eine Dämpfung in beiden Belastungsrichtungen erwünscht ist, d. h. wenn ein besonders hoher Dämpfungseffekt erforderlich ist.

Praktisch alle Heuwerbungsmaschinen, die über mehrere Laufräder geführt werden, lassen sich vorteilhaft nach der Erfindung mit einzeln abgestützten Laufrädern ausrüsten, die zusätzlich über eine gefederte Abstützung und/oder einen Stoßdämpfer verfügen, um eine große Laufruhe bei hohen Fahrgeschwindigkeiten zu erreichen.

Weitere Merkmale und Vorteile der Erfindung ergeben sich aus der nachfolgenden Beschreibung und den Zeichnungen, in denen drei Ausführungsbeispiele der Heuwerbungsmaschine nach der Erfindung, und zwar Kreiselschwader, schematisch, angenähert maßstäblich, dargestellt sind. Es zeigt:
- Fig. 1: - Einen Kreiselschwader in der Seitenansicht, mit einzeln abgestützten Laufrädern, die sich über die Schwenkachse und Stoßdämpfer abstützen, in Arbeitsstellung.
- Fig. 2: - Das Gerät nach Fig. 1 in der Draufsicht gemäß Schnitt A-A.
- Fig. 3: - Einen Kreiselschwader in der Seitenansicht, mit einzeln abgestützten Laufrädern, bei denen sich jeweils zwei Laufräder über die Schwenkachse und eine gemeinsame Feder abstützen, in Arbeitsstellung.
- Fig. 4: - Einen Kreiselschwader nach Fig. 3, in der Draufsicht, gemäß Schnitt B-B.
- Fig. 5: - Einen Kreiselschwader in der Seitenansicht, bei dem sich die einzelnen Laufräder über Schwingmetalle abstützen, in Arbeitsstellung.
- Fig. 6: - Einen Kreiselschwader nach Fig. 5 in der Draufsicht gemäß Schnitt C-C.

Der als Beispiel angeführte Kreiselschwader nach der Erfindung hat einen Dreipunktbock (1), der ihn mit dem nicht dargestellten Dreipunktgestänge des Traktors verbindet. Dabei ist der Dreipunktbock (1) um eine vertikale Achse pendelnd und um eine horizontale Achse schwenkbar, damit sich der Kreiselschwader in Arbeitsstellung gegenüber dem Dreipunktbock (1) frei bewegen kann. Über einen Träger (2) ist der Dreipunktbock (1) mit dem Kreiselgetriebe (3) verbunden, über das die Zinkenarme (6) mit den Zinken (7) antreibbar sind.

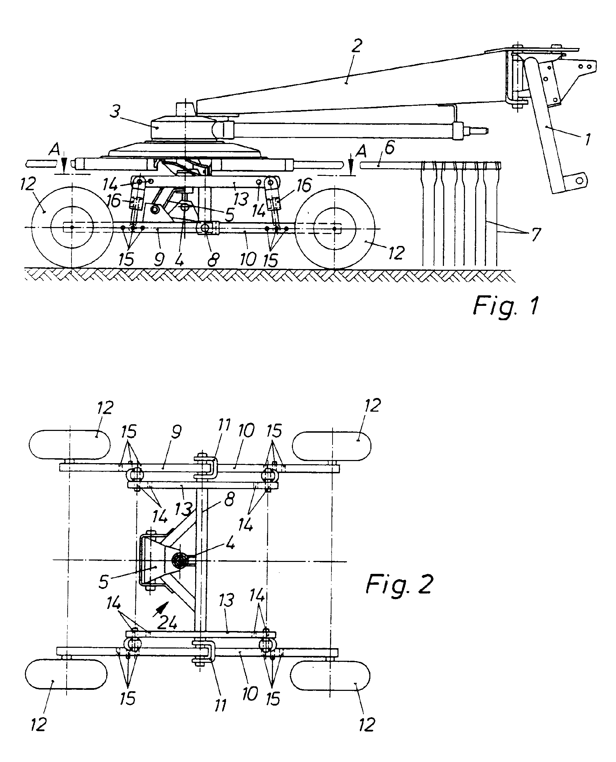

Unterhalb des Kreiselgetriebes (3) ist nach Fig. 1 und 2 über eine Traverse (5) und eine Höhenverstellung (4) das Fahrwerk (24) mit der Schwenkachse (8) angeordnet. Schwenkbar verbunden mit den Enden der Schwenkachse (8) sind die Schwenkarme (9,10), an denen die Laufräder (12) befestigt sind. Jeder Schwenkarm (9,10) stützt sich über einen Stoßdämpfer (16) ab. Der gelenkig aufgehängte Stoßdämpfer (16) ist über den Ausleger (13) mit dem Fahrwerk (24) verbunden. Der Stoßdämpfer (16) kann je nach den Erfordernissen über Verstellbohrungen (14,15) in verschiedenen Stellungen angebracht werden, um das Dämpfungsverhalten anpassen zu können.

Der Schwenkarm (10) ist an seinem Ende zur Schwenkachse (8) mit einer Gabel (11) ausgerüstet, damit in besonders einfacher Weise der Schwenkarm (9), der wie der Schwenkarm (10), um die Schwenkachse (8) pendelt, zwischen der Gabel (11) gelagert werden kann.

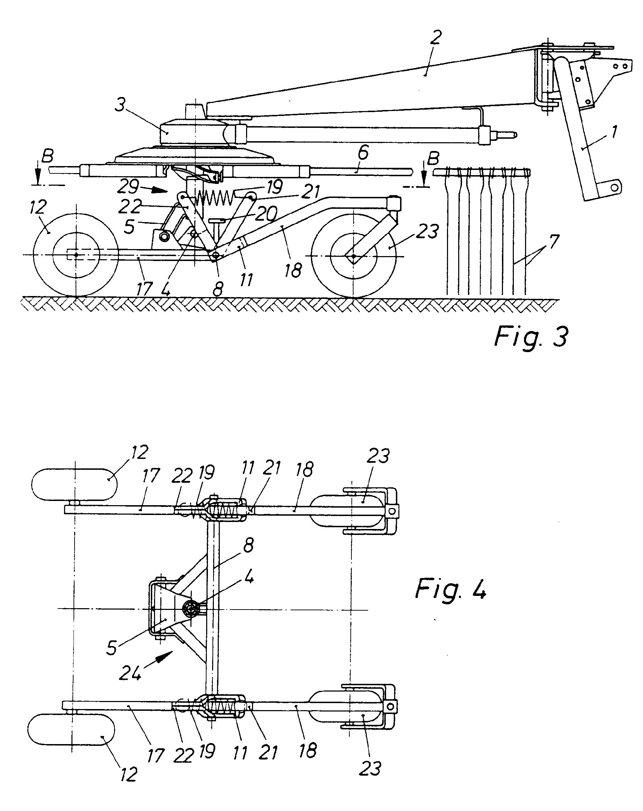

Bei einer weiteren, vorteilhaften Ausführungsform der Erfindung ist der Kreiselschwader nach Figuren 3 und 4 ausgerüstet wie oben beschrieben, jedoch sind am Fahrwerk (24) mit der Schwenkachse (8) auf jeder Seite des Gerätes jeweils zwei einzelne Laufräder (12,23) pendelnd aufgehängt, die mit den jeweiligen Schwenkarmen (17,18) und deren scherenförmig angeordneten Verlängerungen (21,22) fest verbunden sind. Zwischen den Verlängerungen (21,22) ist die Spiralfeder (19) wirksam. Die Schwenkarme (17,18) können bis zum Doppelanschlag (20) frei pendeln.

Überfährt ein Laufrad (12,23) ein Hindernis, wird der dadurch entstehende Stoß über die gefederte Abstützung (29) gemindert. Die Spiralfeder (19) ist so ausgelegt, daß sie auf die Grundbelastung nicht anspricht, damit nur die Stöße aufgefangen werden und dadurch der Kreiselschwader besonders laufruhig arbeitet.

Der Schwenkarm (18) ist an seinem Ende zur Schwenkachse (8) mit einer Gabel (11) ausgerüstet, um in vorteilhafter Weise den Schwenkarm (17) im Bereich der Schwenkachse (8) lagern zu können.

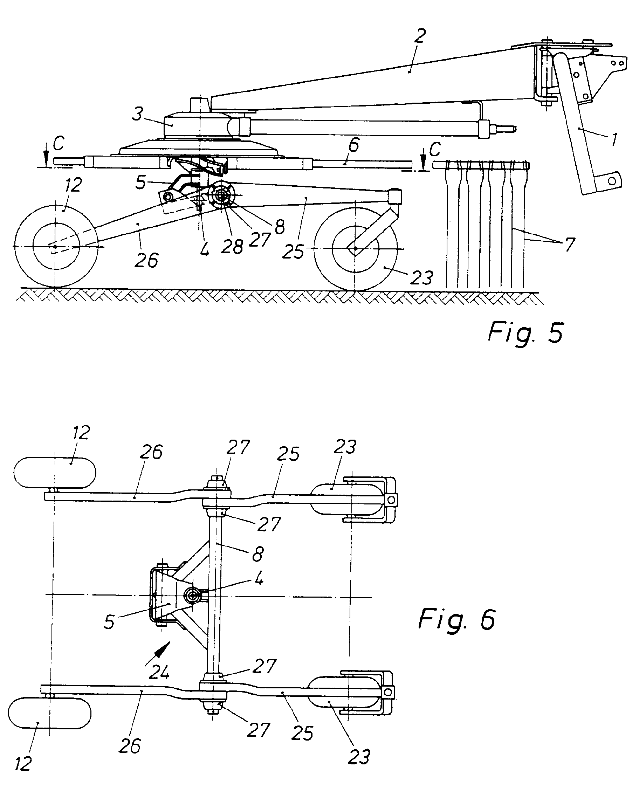

Eine weitere, vorteilhafte Ausführungsform der Erfindung ist in den Figuren 5 und 6 dargestellt. Der Kreiselschwader, wie oben beschrieben, hat vier einzeln aufgehängte Laufräder (12,23), die über die Radträger (25,26) mit der Schwenkachse (8) verbunden sind. An den Radträgern (25,26) sind Schwingmetalle (27) befestigt. Die Schwenkachse (8) hat im äußeren Bereich z.B. die Form einer Viertkantachse (28), auf die die Radträger (25,26) mit den Schwingmetallen (27) aufgeschoben werden und um die die einzelnen Laufräder (12,23) gefedert begrenzt pendeln. Nicht dargestellt sind die Anschläge, die den Schwenkbereich begrenzen.

Jedem Radträger (25,26) ist mindestens ein Schwingmetall (27) zugeordnet. Es kann jedoch auch ein Schwingmetall für beide Radträger (25,26) ausreichend sein.

Bei den verschiedenen Ausführungsformen können zwei nebeneinander arbeitende Pendelnachlaufräder (23) pro Kreiselschwader in Arbeitsstellung ein Radieren der Laufräder bei Kurvenfahrt verhindern, was eine bessere Anpassung des Gerätes an das Gelinde zur Folge hat.

## Patentansprüche

1. Heuwerbungsmaschine mit mindestens einem um eine etwa senkrechte Achse umlaufenden Arbeitswerkzeug, mit einem darunter angeordneten Fahrwerk (24) mit vier Laufrädern (12,23), dadurch gekennzeichnet, daß jedem Laufrad (12,23) eine um eine Schwenkachse (8) schwenkbare, einzelne, abgefederte Abstützung (9,10;17,18;25,26) zugeordnet ist.

2. Heuwerbungsmaschine nach Anspruch 1, dadurch gekennzeichnet, daß jeweils zwei hintereinander angeordneten Laufrädern (12,23) eine gemeinsame Schwenkachse (8) und eine gemeinsame, gefederte Abstützung (29) zugeordnet ist.

3. Heuwerbungsmaschine nach einem der Ansprüche 1 und 2, dadurch gekennzeichnet, daß die Schwenkmöglichkeit der Laufräder (12,23) durch Anschläge (20) begrenzt ist.

4. Heuwerbungsmaschine nach einem der Ansprüche 1 bis 3, dadurch gekennzeichnet, daß die Federkraft und/oder der Federweg der gefederten Abstützung einstellbar sind.

5. Heuwerbungsmaschine nach Anspruch 1, dadurch gekennzeichnet, daß die gefederte Abstützung über einen Stoßdämpfer (16) erfolgt.

6. Heuwerbungsmaschine nach Anspruch 5, dadurch gekennzeichnet, daß jeder Stoßdämpfer (16) in seinem Dämpfungsweg und/oder seiner Dämpfungskraft einstellbar ist.

7. Heuwerbungsmaschine nach einem der Ansprüche 5 und 6, dadurch gekennzeichnet, daß jeder Stoßdämpfer (16) aus einem oder mehreren hydraulisch oder pneumatisch wirkenden Dämpfungselementen besteht.

8. Heuwerbungsmaschine nach einem der Ansprüche 1 bis 7, dadurch gekennzeichnet, daß jedem Laufrad (12,23) mindestens eine gefederte Abstützung und mindestens ein Stoßdämpfer zugeordnet ist.

9. Heuwerbungsmaschine nach einem der Ansprüche 1 bis 8, dadurch gekennzeichnet, daß zwei nebeneinander angeordneten Laufrädern (12,23) mindestens eine gemeinsame, federnde Abstützung und/oder mindestens ein gemeinsamer Stoßdämpfer zugeordnet ist.

## Revendications

1. Machine à faner avec au moins un outil de travail tournant autour d'un axe à peu près vertical, avec châssis (24) placé en dessous qui est doté de quatre roues (12,23), caractérisée par le fait que chaque roue (12,23) est attribuée à une suspension (9,10;17,18;25,26) individuelle sur ressorts pivotant autour d'un axe de pivotage.

2. Machine à faner selon la revendication n° 1, caractérisée par le fait que deux roues se trouvant l'une derrière l'autre (12,23) sont respectivement attribuées à un axe de pivotage commun (8) et une suspension sur ressorts commune (29).

3. Machine à faner selon une des revendications 1 ou 2, caractérisée par le fait que le chemin de pivotage des roues (12,23) est limité en raison de butées (20).

4. Machine à faner selon une des revendications 1 à 3, caractérisée par le fait que l'effet de ressort et/ou la course élastique de la suspension sur ressorts sont réglables.

5. Machine à faner selon la revendication 1, caractérisée par le fait que la suspension sur ressort est assurée par l'amortisseur (16).

6. Machine à faner selon la revendication 5, caractérisée par le fait que le trajet et/ou la force d'amortissement de chaque amortisseur (16) est réglable.

7. Machine à faner selon une des revendications 5 et 6, caractérisée par le fait que chaque amortisseur (16) se compose d'un ou de plusieurs éléments d'amortissement à action hydraulique ou pneumatique.

8. Machine à faner selon une des revendications 1 à 7, caractérisée par le fait que chaque roue (12,23) est attribuée à au moins une suspension sur ressorts et au moins un amortisseur.

9. Machine à faner selon une des revendications 1 à 8, caractérisée par le fait que deux roues (12,23) se trouvant l'une à côté de l'autre sont attribuées à au moins une suspension sur ressorts commune et/ou au moins un amortisseur commun.

## Claims

1. A hay making machine with at least one working tool rotating around a roughly vertical axis, with a chassis (24) arranged beneath which comprises four drive wheels (12,23), characterized in that each drive wheel (12,23) is equipped with its own, spring-mounted support (9,10;17,18;25,26) which swivels on a swivelling axle (8).

2. A hay making machine in accordance with Claim 1, characterized in that a common swivelling axle (8) and a common spring-mounted support (29) are allocated to each pair of drive wheels (12,23) arranged one behind the other.

3. A hay making machine in accordance with any of the above Claims 1 and 2, characterized in that the swivel action of the drive wheels (12,23) is limited by stops (20).

4. A hay making machine in accordance with any of the above Claims 1 to 3, characterized in that the spring force and/or the spring travel of the spring-mounted support can be adjusted.

5. A hay making machine in accordance with Claim 1, characterized in that the spring-mounted support acts via a shock absorber (16).

6. A hay making machine in accordance with Claim 5, characterized in that the damper travel and/or damper force of each shock absorber (16) can be adjusted.

7. A hay making machine in accordance with any of the above Claims 5 and 6, characterized in that each shock absorber (16) consists of one or more hydraulically or pneumatically acting damper elements.

8. A hay making machine in accordance with any of the above Claims 1 to 7, characterized in that at least one spring-mounted support and at least one shock-absorber is allocated to each drive wheel (12,23).

9. A hay making machine in accordance with any of the above Claims 1 to 8, characterized in that at least one common spring-mounted support and/or at least one common shock-absorber is allocated to each pair of drive wheels (12,23) arranged side by side.
